# FASCICULE DE BREVET EUROPEEN

(11) **EP 2 683 672 B1**
(45) Date de publication et mention de la délivrance du brevet: **22.03.2017**
(21) Numéro de dépôt: 11782454.0
(22) Date de dépôt: 06.10.2011
(51) Int. Cl.: C04B 28/06, C04B 37/02, C04B 40/00, H01B 13/14, H01B 19/00

(54) **PROCÉDÉ DE FABRICATION D'UN ISOLATEUR ÉLECTRIQUE HAUTE TENSION AVEC UN MORTIER INCLUANT UN SUPERPLASTIFIANT ET ISOLATEURS ÉLECTRIQUE AINSI OBTENUS**
VERFAHREN ZUR HERSTELLUNG EINES ELEKTRISCHEN HOCHSPANNUNGSISOLATORS MIT MÖRTEL MIT EINEM SUPERWEICHMACHER SOWIE DADURCH ERHALTENEN ELEKTRISCHEN ISOLATOREN
METHOD FOR PRODUCING A HIGH-VOLTAGE ELECTRICAL INSULATOR WITH A MORTAR INCLUDING A SUPERPLASTICIZER AND ELECTRICAL INSULATORS THUS OBTAINED

(43) Date de publication de la demande: 15.01.2014
(73) Titulaire: Sediver, Société Européenne d'Isolateurs en Verre et Composite, 92000 Nanterre (FR)
(72) Inventeur: PRAT, Sandrine, F-03270 Mariol (FR); GEORGE, Jean-Marie, F-63122 Ceyrat (FR); BARTHET, Gilles, F-03300 Cusset (FR)
(74) Mandataire: Prugneau, Philippe
(86) Numéro de dépôt international: PCT/FR2011/052339
(87) Numéro de publication internationale: WO 2013/050665

(56) Documents cités:
- EP-A1- 2 228 804
- FR-A1- 2 640 073
- FR-A1- 2 776 285
- US-A- 5 466 289
- US-A1- 2007 228 612

## Description

### Domaine technique

L'invention concerne un procédé de fabrication d'un isolateur électrique haute tension comprenant au moins un élément d'isolateur métallique scellé à un élément d'isolateur diélectrique par l'intermédiaire d'un mortier de scellement, selon lequel on effectue au moins les étapes suivantes :
préparation dudit mortier de scellement à partir d'un mélange sec comprenant au moins du ciment alumineux et du sable, ledit mélange sec étant malaxé avec au moins de l'eau ;
assemblage dudit élément d'isolateur diélectrique avec ledit élément d'isolateur métallique, ledit mortier de scellement étant placé entre ledit élément d'isolateur diélectrique et ledit élément d'isolateur métallique ;
vibrage desdits éléments d'isolateur diélectrique et métallique pour répartir ledit mortier de scellement entre ledit élément d'isolateur diélectrique et ledit élément d'isolateur métallique.

### Technique antérieure

L'invention concerne tout type d'isolateur électrique de ligne ou de poste à usage en haute ou très haute tension, et en particulier des isolateurs comportant un ou plusieurs éléments métalliques, par exemple de type capot et tige ou de type ferrures, scellés sur une pièce diélectrique en verre ou en porcelaine.

L'invention concerne notamment les isolateurs de type « à capot et à tige » comprenant un capot métallique inséré sur la tête d'une pièce diélectrique formant une jupe et une tige métallique insérée dans la partie inférieure de la tête de la pièce diélectrique. Les isolateurs à capot et à tige sont destinés à être accouplés les uns aux autres en emboîtant l'extrémité libre de la tige d'un premier isolateur dans le capot d'un isolateur adjacent afin de former une chaîne d'isolateurs utilisée pour supporter, ancrer ou mettre en tension une ligne électrique à très haute ou haute tension.

L'invention concerne aussi les isolateurs de poste haute ou très haute tension, comprenant des ferrures d'extrémité métalliques d'ancrage au sol ou de support d'appareillages scellées sur un corps diélectrique en porcelaine sous la forme d'une colonne tubulaire cylindrique munie d'ailettes.

De tels isolateurs peuvent être soumis à des conditions extérieures climatiques et mécaniques très sévères et nécessitent de ce fait que le mortier utilisé pour le scellement des différents éléments de l'isolateur ait une haute résistance mécanique pour garantir un bon scellement entre la pièce diélectrique et l'élément métallique quelles que soient les conditions extérieures.

Il est connu du document de brevet FR 2640073 un procédé de fabrication d'un isolateur électrique à cloche formé par un capuchon, un élément isolant et un pivot assemblés entre eux par un mortier de scellement à base de pâte de ciment.

En première approche, la résistance mécanique d'un mortier de scellement dépend du choix du ciment, que ce soit un ciment alumineux ou un ciment Portland, et des conditions de prise du mortier, comme la température et la durée de la prise. Ces paramètres étant fixés, la résistance mécanique dépend fortement du rapport eau/ciment dans le mortier. Classiquement, l'eau utilisée pour le gâchage du mortier est ajoutée en excès afin d'obtenir une bonne ouvrabilité, ou consistance, du mélange de mortier humide. Cependant, cette quantité d'eau est en réalité supérieure à celle nécessaire au procédé d'hydratation du ciment, donc au terme du processus de prise et de durcissement du mortier, une partie de l'eau de gâchage est non utilisée par le procédé d'hydratation et reste libre dans le mortier. Cette quantité d'eau en excès crée lors de son évaporation une porosité du mortier qui conditionne fortement la résistance mécanique finale du mortier, à savoir qu'une plus grande porosité entraine une résistance mécanique plus faible. Lors de la fabrication d'un tel isolateur, on fait donc prendre en masse le mortier de scellement dans des conditions de température et d'humidité prédéterminées qui permettent d'obtenir un mortier de scellement résistant adapté à l'isolateur.

De manière générale, il est connu que l'ajout d'adjuvant de type plastifiant permet d'améliorer le pouvoir mouillant de l'eau, ce qui permet de réduire un peu le rapport eau/ciment dans le mortier et donc d'augmenter légèrement sa résistance mécanique, mais ces améliorations restent limitées.

Par ailleurs, la répartition du mortier de scellement dans la pièce diélectrique et/ou les éléments métalliques d'un isolateur varie fortement en fonction de l'ouvrabilité du mortier de scellement. Pour garantir une bonne répartition du mortier de scellement, sans laisser notamment apparaître de bulles d'air sur les parois des éléments ou au sein du mortier de scellement par exemple, on soumet généralement lors du procédé de scellement, avant le durcissement du mortier, l'isolateur une fois assemblé à des vibrations. L'importance et la durée de ces vibrations dépend fortement de l'ouvrabilité du mortier de scellement.

Il est bien connu qu'un mortier de scellement à haute résistance mécanique a une faible ouvrabilité, c'est-à-dire qu'il est très visqueux, voire sec, difficile à mettre en place et il s'étale peu sur les éléments à assembler. Il est donc nécessaire de soumettre, avant durcissement, ce mortier de scellement à haute résistance mécanique et à faible ouvrabilité à des vibrations pendant une durée d'au moins 40 secondes pour qu'il se répartisse de façon homogène, c'est-à-dire qu'il se mette en place, autour des éléments à sceller.

L'utilisation d'un mortier de scellement à plus grande ouvrabilité pourrait permettre de limiter l'utilisation la phase de vibrage, mais un mortier de scellement très ouvrable est classiquement associé à une réduction importante de sa résistance mécanique, ce qui n'est généralement pas adapté aux isolateurs électriques haute tension.

On est donc aujourd'hui contraint de choisir entre d'un côté un mortier de scellement à résistance mécanique élevée mais ayant l'inconvénient d'une faible ouvrabilité, et de l'autre côté, un mortier à grande ouvrabilité mais à résistance mécanique réduite.

Pour tenter de sortir de cette contradiction, on connait par exemple du document de brevet FR 2943169 un procédé de fabrication d'un mortier de scellement dans lequel, avant le malaxage, on ajoute à l'eau une solution aqueuse glucosée à base d'un dispersant hydrosoluble contenant des fonctions carboxyliques et des chaînes polyéthers. La solution aqueuse glucosée permet de réduire la quantité d'eau ajoutée au mortier et d'augmenter ainsi sa résistance mécanique. Cependant, le mortier de scellement obtenu par ce procédé nécessite l'application prolongée de vibrations et l'amélioration de la résistance mécanique est limitée.

Au final, on constate donc que la conception d'un nouveau mortier de scellement avec des caractéristiques de consistance et mécaniques désirées reste délicate.

### Exposé de l'invention

Le but de l'invention est de proposer un nouveau procédé de fabrication d'un isolateur électrique haute tension avec un mortier de scellement ayant une très bonne ouvrabilité conjuguée à une très bonne résistance mécanique, tout en étant facile à mettre en oeuvre.

A cet effet, l'invention a pour objet un procédé de fabrication d'un isolateur électrique haute tension comprenant au moins un élément d'isolateur métallique scellé à un élément d'isolateur diélectrique par l'intermédiaire d'un mortier de scellement, selon lequel on effectue au moins les étapes suivantes :
préparation dudit mortier de scellement à partir d'un mélange sec comprenant au moins du ciment alumineux et du sable, ledit mélange sec étant malaxé avec au moins de l'eau ;
assemblage dudit élément d'isolateur diélectrique avec ledit élément d'isolateur métallique, ledit mortier de scellement étant placé entre ledit élément d'isolateur diélectrique et ledit élément d'isolateur métallique ;
vibrage desdits éléments d'isolateur diélectrique et métallique assemblés pour répartir ledit mortier de scellement entre ledit élément d'isolateur diélectrique et ledit élément d'isolateur métallique,
caractérisé en ce que pour préparer ledit mortier de scellement, on ajoute au moins un ingrédient actif de type superplastifiant polymère à base d'ester d'acide polyglycolméthacrylique, et en ce qu'on effectue ledit vibrage pendant une durée comprise entre 2 et 20 secondes, de préférence entre 4 et 15 secondes.

En utilisant un tel superplastifiant, on obtient de manière surprenante, un mortier de scellement thixotrope avant durcissement, c'est-à-dire qui se liquéfie sous contrainte ou dès qu'on le remue, ayant de ce fait une très bonne ouvrabilité. Le mortier de scellement se répartit suffisamment rapidement entre les éléments d'isolateur à sceller, et on a trouvé qu'un vibrage pendant une durée comprise entre 2 et 20 secondes, de préférence entre 4 et 15 secondes était suffisante pour obtenir un isolateur électrique présentant les caractéristiques de résistance mécanique requise pour l'application sur les lignes haute et très haute tension. Cette durée de vibrage raccourcie contribue en outre à l'augmentation importante du débit et de la cadence de fabrication des isolateurs, notamment sur des chaînes de convoyage automatiques.

Le procédé selon l'invention contribue à réduire la présence de fissures, de bulles ou autres défauts en surface ou dans le mortier de scellement, et à renforcer sa résistance mécanique.

En plus, le procédé permet de réduire de manière importante la proportion d'eau ajoutée dans le mortier de scellement et ainsi d'augmenter la résistance mécanique du mortier de scellement après durcissement de 20% à 25% par rapport à un mortier de scellement classique.

Le procédé de fabrication d'un isolateur électrique haute tension selon l'invention peut présenter les particularités suivantes :
- ledit vibrage est réalisé à une fréquence de vibrage comprise entre 300 Hertz et 450 Hertz, de préférence entre 380 Hertz et 400 Hertz ;
- ledit vibrage est réalisé avec un vibreur pneumatique ;
- ledit vibrage est réalisé pendant le déplacement sur un convoyeur des éléments d'isolateurs diélectrique et métallique assemblés ;
- lors de ladite étape de préparation, on fournit ledit ingrédient actif de type superplastifiant sous forme de poudre que l'on intègre dans ledit mélange sec ;
- lors de ladite étape de préparation, on fournit ledit ingrédient actif de type superplastifiant sous forme liquide que l'on mélange avec ladite eau ;
- lors de ladite étape de préparation, on réalise ledit mélange de sorte que par rapport à la masse dudit ciment seul, la masse de sable est comprise entre 15% et 45%, de préférence entre 20% et 25%, la masse dudit ingrédient actif de type superplastifiant est comprise entre 0,05% et 1%, de préférence entre 0,1% à 0,5%, et la masse d'eau est comprise entre 15% et 25%, de préférence entre 16% à 20%, de préférence entre 17% et 19% ;
- lors de ladite étape de préparation, on malaxe ledit mélange sec pendant une durée comprise entre 1 et 10 minutes, de préférence entre 3 et 5 minutes ;
- lors de ladite étape de préparation, on malaxe ledit mélange sec avec ladite eau pendant une durée comprise entre 1 et 10 minutes, de préférence entre 3 et 5 minutes ;
- après ladite étape de vibrage, il comprend en outre une étape de durcissement dans un bain d'eau consistant à faire durcir ledit mortier de scellement dans de l'eau à une température comprise entre 45°C et 80°C, de préférence entre 50°C et 75°C, de préférence entre 65°C et 75°C.

Selon des essais, la répartition par vibrage du mortier de scellement entre les éléments d'isolateurs à sceller est optimum avec une fréquence de vibrage comprise entre 300 Hertz (Hz) et 450 Hz, de préférence entre 380 Hz et 400 Hz.

Le vibrage peut être réalisé sur une table fixe de scellement avec un vibreur pneumatique. Mais on a constaté que le vibrage pouvait aussi être réalisé, au moins en partie, pendant le déplacement sur un convoyeur des éléments d'isolateurs assemblés avec le mortier de scellement, le convoyeur pouvant être un convoyeur à chaîne qui, en fonctionnement, transmet des vibrations propres aux éléments d'isolateurs transportés qui sont suffisantes pour liquéfier le mortier de scellement thixotrope. Cela contribue à augmenter la cadence de fabrication des isolateurs électriques.

L'invention s'étend à un isolateur électrique haute tension du type à capot et à tige fabriqué par le procédé selon l'invention, dans lequel l'élément d'isolateur diélectrique définit une jupe en verre ou en porcelaine et l'élément d'isolateur métallique définit un capot métallique ou une tige métallique et à une chaîne de tels isolateurs électriques pour ligne électrique à haute ou très haute tension.

L'invention s'étend aussi à un isolateur électrique haute tension de poste fabriqué par le procédé selon l'invention, dans lequel l'élément d'isolateur diélectrique définit un corps tubulaire en porcelaine avec des ailettes et l'élément d'isolateur métallique définit une ferrure d'extrémité métallique.

### Description sommaire des dessins

L'invention sera maintenant décrite plus en détail et en référence aux dessins annexés qui en illustrent un exemple non limitatif.
La figure 1 montre schématiquement un isolateur électrique haute tension de type à capot et à tige selon l'invention.
La figure 2 montre un organigramme du procédé de fabrication selon l'invention de l'isolateur de la figure 1.

### Description des modes de réalisation

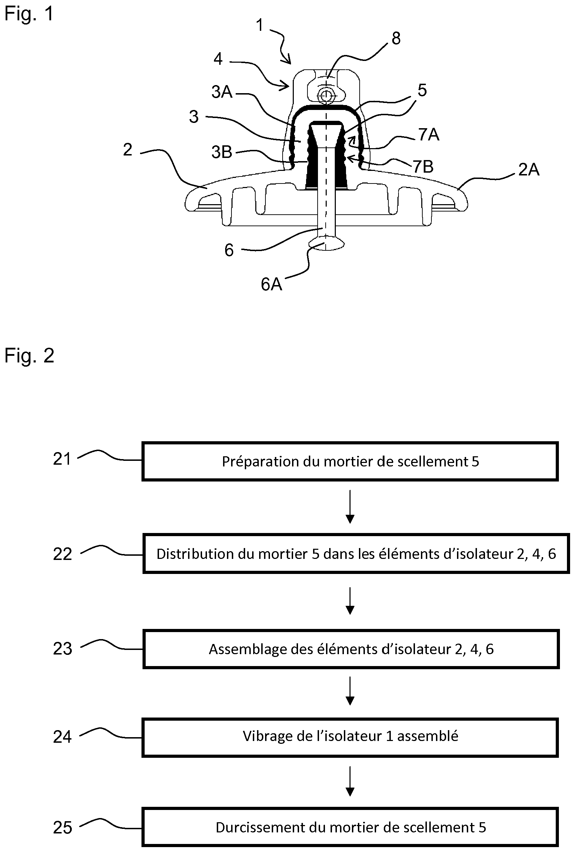

Sur la figure 1, on a représenté un isolateur 1 électrique haute tension de type à capot et à tige, fabriqué selon le procédé de l'invention, comprenant un élément d'isolateur diélectrique définissant une pièce diélectrique 2, par exemple en verre ou en porcelaine, définissant une jupe périphérique 2A et une tête 3 creuse avec une surface externe 3A crantée et une cavité interne 3B également crantée, et un premier élément d'isolateur métallique définissant un capot 4 et un second élément d'isolateur métallique définissant une tige 6, le capot 4 et la tige 6 étant scellés sur la pièce diélectrique 2.

Comme on peut le voir sur la figure 1, le capot 4 est emboîté sur la tête 3 et scellé sur la surface externe 3A de la tête 3 avec un mortier de scellement 5, la tige 6 étant scellée dans la cavité 3B de la pièce diélectrique 2 par du mortier de scellement 5 similaire à celui présent dans le capot 4. De manière avantageuse, les crans 7A, 7B respectifs de la surface externe 3A et de la cavité interne 3B de la tête 3 permettent un meilleur accrochage du mortier de scellement 5 sur la pièce diélectrique 2.

Comme visible sur la figure 1, au sommet du capot 4 est formé un évidemment 8 ayant une forme complémentaire à une extrémité libre 6A de la tige 6 pour autoriser l'insertion mutuelle d'une tige 6 d'un isolateur 1 dans l'évidemment 8 d'un capot 4 d'un autre isolateur 1 afin de constituer une chaîne d'isolateurs 1 montés en série (non représentée).

Le procédé de fabrication d'un isolateur 1 selon l'invention sera maintenant décrit en référence à la figure 2.

A l'étape de préparation 21, on commence par préparer le mortier de scellement 5 en mélangeant d'abord manuellement à sec du ciment alumineux, du sable et un plastifiant de type superplastifiant sous forme solide, choisi parmi des polymères anioniques à base d'ester d'acide polyglycolméthacrylique, par exemple en poudre ou sous forme granulaire, de sorte à obtenir un mélange sec.

Puis, le mélange sec est malaxé au ralenti dans un malaxeur de préférence normalisé, par exemple selon la norme NF EN 196-1, pendant une durée comprise entre 1 et 10 minutes, de préférence entre 3 et 5 minutes afin d'obtenir un mélange sec complètement homogène.

Dans ce mélange sec, la masse de sable est comprise entre 15% et 45%, de préférence entre 20% et 25% par rapport à la masse dudit ciment sec seul et la masse de superplastifiant est comprise entre 0,05% et 1%, de préférence entre 0,1% à 0,5% par rapport à la masse dudit ciment sec seul. Ainsi, la proportion en masse de ciment dans le mélange sec est comprise entre 85% et 55%, de préférence entre 75% et 80%.

De préférence, le ciment est choisi parmi des ciments alumineux aussi appelés ciment fondu, contenant un taux d'alumine compris entre environ 30% et 75%. Le sable est de préférence du sable fin de granulométrie contrôlée et centrée sur une valeur comprise entre environ 200 et 300 micromètres.

Puis, on ajoute au mélange sec complètement homogène de l'eau, de préférence en une fois afin d'assurer une bonne mouillabilité du mélange sec, la masse d'eau étant comprise entre 15% et 25%, de préférence entre 16 % à 20 %, de préférence entre 17% et 19%, par rapport à la masse de ciment sec seul. La proportion d'eau pourra être affinée dans ces proportions selon le degré d'ouvrabilité requis du mortier de scellement 5.

On commence alors un malaxage lent du mélange sec avec l'eau jusqu'à complète humidification du mélange sec, puis on malaxe vigoureusement le mélange humidifié pendant une durée comprise entre 1 et 10 minutes, de préférence entre 3 et 5 minutes, de sorte à obtenir en sortie du malaxeur une pâte de mortier de scellement 5 humide thixotrope c'est-à-dire capable de se liquéfier dès qu'on la remue, ce qui confère au mortier de scellement 5 une très bonne ouvrabilité et facilite beaucoup son utilisation.

On entend par malaxage lent et vigoureux des malaxages comme définis dans le tableau 2 de la norme NF EN 196-1.

En variante, on peut utiliser un plastifiant de type superplastifiant sous forme liquide, dans les proportions telles que décrites plus haut. Dans ce cas, le superplastifiant liquide sera d'abord mélangé à l'eau, puis le mélange composé de l'eau et du superplastifiant sera ajouté au mélange sec homogène composé seulement du ciment et du sable et les malaxages respectifs du mélange sec et du mélange humidifié seront alors réalisés comme décrits plus haut. Plus précisément, on mélange d'abord manuellement à sec du ciment alumineux et du sable, puis le mélange sec est malaxé au ralenti dans un malaxeur de préférence normalisé pendant une durée comprise entre 1 et 10 minutes, de préférence entre 3 et 5 minutes afin d'obtenir un mélange sec complètement homogène. Puis, on ajoute au mélange sec complètement homogène de l'eau préalablement mélangée avec le plastifiant de type superplastifiant décrit plus haut mais sous forme liquide, choisi parmi des polymères anioniques à base d'ester d'acide polyglycolméthacrylique, de préférence en une fois afin d'assurer une bonne mouillabilité du mélange sec. Le mélange sec est malaxé lentement avec l'eau et le superplastifiant jusqu'à complète humidification du mélange sec, puis on malaxe vigoureusement le mélange humidifié pendant une durée comprise entre 1 et 10 minutes, de préférence entre 3 et 5 minutes, de sorte à obtenir en sortie du malaxeur une pâte de mortier de scellement 5 humide thixotrope comme décrit plus haut.

Puis, à l'étape de distribution 22, on distribue le mortier de scellement 5 d'une part dans le capot 4 et d'autre part dans la cavité interne 3B de la tête 3 de la pièce diélectrique 2, ce qui est facilité par la très bonne ouvrabilité du mortier de scellement 5.

L'isolateur 1 est alors assemblé à l'étape d'assemblage 23 en disposant dans un premier temps la tige 6 dans la cavité interne 3B de la tête 3 de la pièce diélectrique 2, puis dans un second temps la tête 3 de la pièce diélectrique 2 dans le capot 4 . Plus précisément, on amène la tige 6 dans le mortier 5 de la cavité interne 3B jusqu'à ce que la tige 6 arrive en butée contre le fond de la cavité interne 3B.

On soumet alors l'isolateur 1, à l'étape de vibrage 24, à de courtes vibrations pendant une durée comprise entre 2 et 20 secondes, de préférence entre 4 et 15 secondes. Ces courtes vibrations permettent de fluidifier le mortier de scellement 5 thixotrope et aide à sa mise en place ou répartition homogène dans le capot 4 et la cavité interne 3B, tout en réduisant notamment la formation de bulles d'air ou de défauts dans le mortier de scellement 5.

Enfin, à l'étape de durcissement 25, on réalise le durcissement du mortier de scellement 5 en bac dit « de climatisation » par immersion de l'isolateur 1 dans un bain d'eau, de préférence d'eau chaude à une température comprise entre 45°C et 80°C, de préférence entre 50°C et 75°C, et de préférence entre 65°C et 75°C, pendant une durée comprise entre environ 40 et 120 minutes. Le mortier de scellement 5 est durci par la climatisation, puis il est laissé refroidir à l'air libre à température ambiante.

Bien entendu, on pourrait inverser le déroulement de l'étape d'assemblage 23 de l'isolateur 1, c'est-à-dire placer dans un premier temps la pièce diélectrique 2 dans le capot 4 , puis dans un second temps la tige 6 dans la pièce diélectrique 2 avant de procéder au durcissement du mortier de scellement 5.

En variante, après la distribution du mortier de scellement 5 dans les éléments d'isolateur, on peut aussi assembler dans un premier temps seulement la tige 6 dans la cavité interne 3B de la tête 3 de la pièce diélectrique 2, puis procéder au durcissement du mortier de scellement 5 comme décrit ci-dessus pour cette partie seulement de l'isolateur 1 composée de la pièce diélectrique 2 et de la tige 6. Puis, dans un second temps, on assemble la tête 3 de la pièce diélectrique 2 dans le capot 4 et on procède au durcissement du mortier de scellement 5 comme décrit ci-dessus pour l'isolateur 1 entièrement assemblé.

On peut également inverser l'ordre l'assemblage de l'isolateur 1 de cette variante en commençant par assembler la pièce diélectrique 2 dans le capot 4 et durcir le mortier de scellement 5 de cette partie d'isolateur 1 composée de la pièce diélectrique 2 et du capot 4 ; puis assembler la tige 6 dans la pièce diélectrique 2 et durcir le mortier de scellement 5 de cette autre partie d'isolateur 1.

Avantageusement, l'utilisation d'un mortier de scellement selon l'invention permet de fabriquer un isolateur 1 électrique haute tension dans un atelier de scellement plus compact, avec un débit et une cadence améliorée. En outre, les efforts ou contraintes appliquées sur l'isolateur 1 électrique haute tension sont mieux distribués sur la pièce diélectrique 2, ce qui augmente encore la résistance mécanique de l'isolateur 1. On peut donc réaliser, pour une même gamme mécanique d'isolateur électrique haute tension, des isolateurs électriques haute tension de dimensions réduites comparés aux isolateurs actuels.

Il va de soi que la présente invention ne saurait être limitée à la description qui précède de l'un de ses modes de réalisation, susceptibles de subir quelques modifications sans pour autant sortir du cadre de l'invention.

En particulier, on peut aussi fabriquer selon le procédé de fabrication de l'invention un isolateur de poste haute ou très haute tension, comprenant des ferrures d'extrémité métalliques pour l'ancrage au sol ou le support d'appareillages scellées sur un corps diélectrique en porcelaine ou en verre sous la forme d'une colonne tubulaire de préférence cylindrique, munie d'ailettes.

## Revendications

1. Procédé de fabrication d'un isolateur (1) électrique haute tension comprenant au moins un élément d'isolateur métallique (4, 6) scellé à un élément d'isolateur diélectrique (2) par l'intermédiaire d'un mortier de scellement (5), selon lequel on effectue au moins les étapes suivantes :
- préparation (21) dudit mortier de scellement (5) à partir d'un mélange sec comprenant au moins du ciment alumineux et du sable, ledit mélange sec étant malaxé avec au moins de l'eau ;
- assemblage (23) dudit élément d'isolateur diélectrique (2) avec ledit élément d'isolateur métallique (4, 6), ledit mortier de scellement (5) étant placé entre ledit élément d'isolateur diélectrique (2) et ledit élément d'isolateur métallique (4, 6);
- vibrage (24) desdits éléments d'isolateur diélectrique (2) et métallique (4, 6) assemblés pour répartir ledit mortier de scellement (5) entre ledit élément d'isolateur diélectrique (2) et ledit élément d'isolateur métallique (4, 6),
**caractérisé en ce que** pour préparer (21) ledit mortier de scellement (5), on ajoute au moins un ingrédient actif de type superplastifiant polymère à base d'ester d'acide polyglycolméthacrylique, et **en ce qu'**on effectue ledit vibrage (24) pendant une durée comprise entre 2 et 20 secondes, de préférence entre 4 et 15 secondes.

2. Procédé de fabrication d'un isolateur (1) électrique haute tension selon la revendication 1, **caractérisé en ce que** ledit vibrage (24) est réalisé à une fréquence de vibrage comprise entre 300 Hertz et 450 Hertz, de préférence entre 380 Hertz et 400 Hertz.

3. Procédé de fabrication d'un isolateur (1) électrique haute tension selon la revendication 1, **caractérisé en ce que** ledit vibrage (24) est réalisé avec un vibreur pneumatique.

4. Procédé de fabrication d'un isolateur (1) électrique haute tension selon la revendication 1, **caractérisé en ce que** ledit vibrage (24) est réalisé pendant le déplacement sur un convoyeur des éléments d'isolateurs diélectrique (2) et métallique (4, 6) assemblés.

5. Procédé de fabrication d'un isolateur (1) électrique haute tension selon l'une des revendications 1 à 4, **caractérisé en ce que**, lors de ladite étape de préparation (21), on fournit ledit ingrédient actif de type superplastifiant sous forme de poudre que l'on intègre dans ledit mélange sec.

6. Procédé de fabrication d'un isolateur (1) électrique haute tension selon l'une des revendications 1 à 4, **caractérisé en ce que**, lors de ladite étape de préparation (21), on fournit ledit ingrédient actif de type superplastifiant sous forme liquide que l'on mélange avec ladite eau.

7. Procédé de fabrication d'un isolateur (1) électrique haute tension selon au moins l'une des revendications 1 à 6, **caractérisé en ce que** lors de ladite étape de préparation (21), on réalise ledit mélange de sorte que par rapport à la masse dudit ciment seul, la masse de sable est comprise entre 15% et 45%, de préférence entre 20% et 25%, la masse dudit ingrédient actif de type superplastifiant est comprise entre 0,05% et 1%, de préférence entre 0,1% à 0,5%, et la masse d'eau est comprise entre 15% et 25%, de préférence entre 16% à 20%, de préférence entre 17% et 19%.

8. Procédé de fabrication d'un isolateur (1) électrique haute tension selon au moins l'une des revendications 1 à 7, **caractérisé en ce que** lors de ladite étape de préparation (21), on malaxe ledit mélange sec pendant une durée comprise entre 1 et 10 minutes, de préférence entre 3 et 5 minutes.

9. Procédé de fabrication d'un isolateur (1) électrique haute tension selon au moins l'une des revendications 1 à 8, **caractérisé en ce que** lors de ladite étape de préparation (21), on malaxe ledit mélange sec avec ladite eau pendant une durée comprise entre 1 et 10 minutes, de préférence entre 3 et 5 minutes.

10. Procédé de fabrication d'un isolateur (1) électrique haute tension selon au moins l'une des revendications 1 à 9, **caractérisé en ce qu'**après ladite étape de vibrage (24), il comprend en outre une étape de durcissement (25) dans un bain d'eau consistant à faire durcir ledit mortier de scellement (5) dans de l'eau à une température comprise entre 45°C et 80°C, de préférence entre 50°C et 75°C, de préférence entre 65°C et 75°C.

11. Isolateur (1) électrique haute tension du type à capot et à tige fabriqué par un procédé selon au moins l'une des revendications 1 à 10, dans lequel l'élément d'isolateur diélectrique (2) définit une jupe (2A) en verre ou en porcelaine et l'élément d'isolateur métallique (4, 6) définit un capot métallique (4) ou une tige métallique (6).

12. Chaîne d'isolateurs (1) électriques pour ligne électrique à haute ou très haute tension, comprenant une pluralité d'isolateurs (1) électriques selon la revendication 11.

13. Isolateur (1) électrique haute tension de poste fabriqué par un procédé selon au moins l'une des revendications 1 à 10, dans lequel l'élément d'isolateur diélectrique (2) définit un corps tubulaire en porcelaine avec des ailettes et l'élément d'isolateur métallique (4) définit une ferrure d'extrémité métallique.

## Patentansprüche

1. Verfahren zur Herstellung eines elektrischen Hochspannungsisolators (1), umfassend mindestens ein metallisches Isolatorelement (4, 6), das durch einen Versiegelungsmörtel (5) an ein dielektrisches Isolatorelement (2) versiegelt ist, wobei mindestens die folgenden Schritte durchgeführt werden:
- Herstellen (21) des Versiegelungsmörtels (5) aus einer Trockenmischung, umfassend mindestens Tonerdezement und Sand, wobei die Trockenmischung mindestens mit Wasser vermischt wird;
- Zusammenbauen (23) des dielektrischen Isolatorelements (2) mit dem metallischen Isolatorelement (4, 6), wobei der Versiegelungsmörtel (5) zwischen dem dielektrischen Isolatorelement (2) und dem metallischen Isolatorelement (4, 6) angeordnet wird;
- Rütteln (24) des dielektrischen Isolatorelements (2) und des metallischen Isolatorelements (4, 6), die zusammengebaut werden, um den Versiegelungsmörtel (5) zwischen dem dielektrischen Isolatorelement (2) und dem metallischen Isolatorelement (4, 6) zu verteilen;
**dadurch gekennzeichnet, dass** zum Herstellen (21) des Versiegelungsmörtels (5) mindestens ein aktiver Bestandteil vom Typ eines Polymersuperweichmachers auf Basis von Polyglycol-Methacrylsäureester hinzugefügt wird, und dadurch, dass das Rütteln (24) für eine Zeitdauer von 2 bis 20 Sekunden, vorzugsweise von 4 bis 15 Sekunden, durchgeführt wird.

2. Verfahren zur Herstellung eines elektrischen Hochspannungsisolators (1) nach Anspruch 1, **dadurch gekennzeichnet, dass** das Rütteln (24) mit einer Rüttelfrequenz, die zwischen 300 Hertz und 450 Hertz, vorzugsweise zwischen 380 Hertz und 400 Hertz, liegt, durchgeführt wird.

3. Verfahren zur Herstellung eines elektrischen Hochspannungsisolators (1) nach Anspruch 1, **dadurch gekennzeichnet, dass** das Rütteln (24) mit einem pneumatischen Rüttler durchgeführt wird.

4. Verfahren zur Herstellung eines elektrischen Hochspannungsisolators (1) nach Anspruch 1, **dadurch gekennzeichnet, dass** das Rütteln (24) während des Bewegens des dielektrischen Isolatorelements (2) und des metallischen Isolatorelements (4, 6), die zusammengebaut werden, auf einem Förderband durchgeführt wird.

5. Verfahren zur Herstellung eines elektrischen Hochspannungsisolators (1) nach einem der Ansprüche 1 bis 4, **dadurch gekennzeichnet, dass** beim Schritt des Herstellens (21) der aktive Bestandteil vom Typ des Polymersuperweichmachers in Form von Pulver bereitgestellt wird, welches in die Trockenmischung eingebracht wird.

6. Verfahren zur Herstellung eines elektrischen Hochspannungsisolators (1) nach einem der Ansprüche 1 bis 4, **dadurch gekennzeichnet, dass** beim Schritt des Herstellens (21) der aktive Bestandteil vom Typ des Polymersuperweichmachers in flüssiger Form bereitgestellt wird, welcher mit Wasser vermischt wird.

7. Verfahren zur Herstellung eines elektrischen Hochspannungsisolators (1) nach mindestens einem der Ansprüche 1 bis 6, **dadurch gekennzeichnet, dass** beim Schritt des Herstellens (21) die Mischung derart hergestellt wird, dass die Masse an Sand in Bezug auf die Masse nur des Zements zwischen 15 % und 45 %, vorzugsweise zwischen 20 % und 25 % liegt, die Masse des aktiven Bestandteils vom Typ des Polymersuperweichmachers zwischen 0,05 % und 1%, vorzugsweise zwischen 0,1 % bis 0,5 % liegt, und die Masse an Wasser zwischen 15 % und 25 %, vorzugsweise zwischen 16 % bis 20 %, vorzugsweise zwischen 17 % und 19 %, liegt.

8. Verfahren zur Herstellung eines elektrischen Hochspannungsisolators (1) nach mindestens einem der Ansprüche 1 bis 7, **dadurch gekennzeichnet, dass** beim Schritt des Herstellens (21) die Trockenmischung für eine Zeitdauer zwischen 1 und 10 Minuten, vorzugsweise zwischen 3 und 5 Minuten, vermischt wird.

9. Verfahren zur Herstellung eines elektrischen Hochspannungsisolators (1) nach mindestens einem der Ansprüche 1 bis 8, **dadurch gekennzeichnet, dass** beim Schritt des Herstellens (21) die Trockenmischung für eine Zeitdauer zwischen 1 und 10 Minuten, vorzugsweise zwischen 3 und 5 Minuten, mit dem Wasser vermischt wird.

10. Verfahren zur Herstellung eines elektrischen Hochspannungsisolators (1) nach mindestens einem der Ansprüche 1 bis 9, **dadurch gekennzeichnet, dass** es nach dem Schritt des Rüttelns (24) ferner einen Schritt des Aushärtens (25) in einem Wasserbad aufweist, der darin besteht, den Versiegelungsmörtel (5) in Wasser bei einer Temperatur zwischen 45 °C und 80 °C, vorzugsweise zwischen 50 °C und 75 °C, insbesondere zwischen 65 °C und 75 °C, auszuhärten.

11. Elektrischer Hochspannungsisolator (1) vom Typ mit Kappe und mit Stab, der durch ein Verfahren mindestens nach einem der Ansprüche 1 bis 10 hergestellt ist, wobei das dielektrische Isolatorelement (2) einen Mantel (2A) aus Glas oder aus Porzellan definiert und das metallische Isolatorelement (4, 6) eine Metallkappe (4) oder einen Metallstab (6) definiert.

12. Kette von elektrischen Isolatoren (1) für elektrische Hoch- oder Höchstspannungsleitung, umfassend mehrere elektrische Isolatoren (1) nach Anspruch 11.

13. Elektrischer Hochspannungsisolator (1) eines Umspannwerks, der durch ein Verfahren nach mindestens einem der Ansprüche 1 bis 10 hergestellt ist, wobei das dielektrische Isolatorelement (2) einen röhrenförmigen Körper aus Porzellan mit Rippen definiert und das metallische Isolatorelement (4) eine metallische Endarmatur definiert.

## Claims

1. A method of manufacturing a high-voltage electrical insulator (1) comprising at least one metal insulator element (4, 6) cemented to a dielectric insulator element (2) by means of a cement mortar (5), in which method, at least one of the following steps is performed:
• preparing (21) said cement mortar (5) from a dry mix comprising at least aluminous cement and sand, said dry mix being mixed with at least water;
• assembling (23) said dielectric insulator element (2) with said metal insulator element (4, 6), said cement mortar (5) being placed between said dielectric insulator element (2) and said metal insulator element (4, 6); and
• vibrating (24) said dielectric insulator element (2) and said metal insulator element (4, 6) as assembled together, so as to distribute said cement mortar (5) between said dielectric insulator element (2) and said metal insulator element (4, 6);
said method being **characterized in that**, in order to prepare (21) said cement mortar (5), at least one active ingredient of the polymer superplasticizer type based on polyglycol methacrylic acid ester is added, and **in that** said vibrating (24) is performed for a duration lying in the range 2 seconds to 20 seconds, and preferably in the range 4 seconds to 15 seconds.

2. A method of manufacturing a high-voltage electrical insulator (1) according to claim 1, **characterized in that** said vibrating (24) is performed at a vibrating frequency lying in the range 300 Hertz to 450 Hertz, and preferably in the range 380 Hertz to 400 Hertz.

3. A method of manufacturing a high-voltage electrical insulator (1) according to claim 1, **characterized in that** said vibrating (24) is performed using a pneumatic vibrator.

4. A method of manufacturing a high-voltage electrical insulator (1) according to claim 1, **characterized in that** said vibrating (24) is performed while the assembled-together dielectric elements (2) and metal elements (4, 6) are moving along a conveyor.

5. A method of manufacturing a high-voltage electrical insulator (1) according to any one of claims 1 to 4, **characterized in that**, during said preparation step (21), said active ingredient of the superplasticizer type is supplied in powder form and is incorporated into said dry mix.

6. A method of manufacturing a high-voltage electrical insulator (1) according to any one of claims 1 to 4, **characterized in that**, during said preparation step (21), said active ingredient of the superplasticizer type is supplied in liquid form and is mixed with said water.

7. A method of manufacturing a high-voltage electrical insulator (1) according to at least one of claims 1 to 6, **characterized in that**, during said preparation step (21), said mix is formed so that, relative to the weight of said cement alone, the weight of sand lies in the range 15% to 45%, and preferably in the range 20% to 25%, the weight of said active ingredient of the superplasticizer type lies in the range 0.05% to 1%, and preferably in the range 0.1% to 0.5%, and the weight of water lies in the range 15% to 25%, preferably in the range 16% to 20%, and more preferably in the range 17% to 19%.

8. A method of manufacturing a high-voltage electrical insulator (1) according to at least one of claims 1 to 7, **characterized in that**, during said preparation step (21), said dry mix is mixed for a duration lying in the range 1 minute to 10 minutes, and preferably in the range 3 minutes to 5 minutes.

9. A method of manufacturing a high-voltage insulator (1) according to at least one of claims 1 to 8, **characterized in that** during said preparation step (21), said dry mix is mixed with said water for a duration lying in the range 1 minute to 10 minutes, and preferably in the range 3 minutes to 5 minutes.

10. A method of manufacturing a high-voltage electrical insulator (1) according to at least one of the claims 1 to 9, **characterized in that**, after said vibration step (24), it further comprises a hardening step (25) performed in a bath of water and consisting in causing said cement mortar (5) to harden in water at a temperature lying in the range 45°C to 80°C, preferably in the range 50°C to 75°C, and more preferably in the range 65°C to 75°C.

11. A high-voltage insulator (1) of the cap and pin type, manufactured using a method according to at least one of the claims 1 to 10, in which insulator the dielectric insulator element (2) defines a skirt (2A) made of glass or of porcelain, and the metal insulator element (4, 6) defines a metal cap (4) or a metal pin (6).

12. A string of electrical insulators (1) for a high voltage or a very high voltage electricity line, said string comprising a plurality of electrical insulators (1) according to claim 11.

13. A substation high-voltage insulator (1) manufactured using a method according to at least one of the claims 1 to 10, in which insulator the dielectric insulator element (2) defines a tubular body made of porcelain with fins or "sheds", and the metal insulator element (4) defines a metal end fitting.
